# EUROPÄISCHE PATENTSCHRIFT

(11) **EP 2 669 594 B1**
(45) Veröffentlichungstag und Bekanntmachung des Hinweises auf die Patenterteilung: **13.07.2016**
(21) Anmeldenummer: 13166708.1
(22) Anmeldetag: 06.05.2013
(51) Int. Cl.: F24J 2/52, F24J 2/46

(54) **Solaranlage**
Solar installation
Installation solaire

(30) Priorität: 31.05.2012 CH 7502012
(43) Veröffentlichungstag der Anmeldung: 04.12.2013
(73) Patentinhaber: DHP Technology GmbH, 7214 Grüsch (CH)
(72) Erfinder: Büchel, Arthur, 9496 Balzers (LI); Baumgartner, Franz, 78464 Konstanz (DE); Diem, Gian Andri, 7214 Grüsch (CH); Hügli, Andreas, 7214 Grüsch (CH)
(74) Vertreter: Riederer Hasler & Partner Patentanwälte AG

(56) Entgegenhaltungen:
- EP-A1- 2 020 467
- WO-A1-2006/032077
- WO-A1-2011/059062
- DE-U1-202006 009 100
- JP-A- 2003 318 430
- US-A1- 2010 065 104

## Beschreibung

Die Erfindung betrifft eine Solaranlage gemäss Oberbegriff des Anspruchs 1, und ein Verfahren gemäss Oberbegriff des Anspruchs 13.

### Stand der Technik

Aus dem Stand der Technik, beispielsweise der WO 2010/006460 sind Solaranlagen bekannt, bei denen Solarpaneelen an zwischen zwei Haltestützen gespannten Seilen schwenkbar befestigt sind. Derartige Solaranlagen bergen den Nachteil in sich, dass sie für Wind und Schnee eine grosse Angriffsfläche bilden. Die Tragekonstruktion muss dementsprechend stabil ausgeführt sein, dass Wind und Wetter die Solaranlage nicht beschädigen können. Dementsprechend teuer ist eine solche stabile wetterresistente Solaranlage.

Aus der JP 2003318430 sind Solarmodule bekannt, welche durch Paare von an gegenüberliegende Seiten vorgesehen Scharnieren verbunden sind. Die Mehrzahl der Solarmodule besitzt faltbare elektrische Verbindungsmittel an den Kopplungsabschnitt der Scharniere. Ferner umfassen die Solarmodule Führungseinrichtung an den beiden Seiten, welche orthogonal zu den beiden Seiten orientiert sind, an denen die Scharniere vorgesehen sind. Die Führungsmittel wirken mit Drahtseilen zusammen, welche als Führungsschienen für die Solarmodule vorgesehen sind.

In der US 2010/0065104 ist ein einziehbares Solarpanelsystem gezeigt. Die Solarpaneele sind paarweise zusammengefasst, wobei die einzelnen Paare durch ein Gelenk miteinander verbunden sind. Das System umfasst auch eine Vorrichtung zum Ein- und Ausfahren der gelenkig miteinander verbundenen Solarpaneelpaare, beispielsweise einen teleskopierbaren Segelmasten. Die Solarpaneele können daher in einen Stapel übergeführt werden, wenn sie nicht in Verwendung sind.

Die EP 2020467 beschreibt eine Markise mit einem Sonnendach und einer Tragekonstruktion für das Sonnendach. Das Sonnendach ist an Querstreben entlang der Tragekonstruktion ein- und ausziehbar. An der der Sonne zugewandten Seite des Sonnendachs sind Solarpaneele derart positioniert, dass sie das Zusammenfalten des Sonnendachs nicht behindern.

Die WO/2011059062 offenbart eine in der Luft aufgehängte Solaranlage mit einer Mehrzahl von Solarpaneelen. Die Solarpaneele sind zusammenfaltbar miteinander verbunden und sind zwischen zwei Masten aufgehängt. Die Luft unterhalb der Solarpaneele dient zu derer Kühlung. Die Solarpaneele können in einem Gehäuse zusammengefaltet sein. Die Trägersubstrate der Solarzellen sind als dünne rechteckige Kunststofffilme ausgestaltet. Diese Substrate zeichnen sich dadurch aus, dass sie dünn, leicht und flexibel sind.

### Aufgabe der Erfindung

Aufgabe der vorliegenden Erfindung ist es daher, eine Solaranlage vorzuschlagen, welche den Schutz der Solarpaneelen bei widrigen Witterungsverhältnissen (Wind, Schnee, Sand oder Eis) verbessert.

### Beschreibung

Erfindungsgemäss wird die Aufgabe bei einer Solaranlage gemäss Anspruch 1 gelöst. Die Einbausung schützt die Solarpaneele nicht nur vor Wind und Wetter und deren Auswirkungen auf eine mögliche Beschädigung der Solaranlage, sondern bewirkt, dass die Solarpaneele auch weniger stark verschmutzen. Dies liegt daran, dass die Solarpaneele nicht ständig der Umgebung ausgesetzt sind, sondern wenigstens in der Nacht in der Schutzposition eingefahren sind. Auch bei Wetterbedingungen wie Regen, Wind, Sandsturm o.ä. werden die Solarpaneele eingezogen um sie vor Verschmutzungen zu schützen. Die Einhausung wirkt daher auch als eine präventive Schutzmassnahme vor Verschmutzungen. Denkbar ist es auch dass in einer Einhausung von zwei Seiten Solarpaneele in eine Schutzposition aufgenommen sind und von beiden sich gegenüberliegenden Seiten in Betriebspositionen gezogen werden. Die Solarpa neele können teilweise auch durch Plattenelemente ersetzt sein, welche keine Solarzellen tragen.

Die Verschiebbarkeit zwischen der Betriebs- und Ruheposition bewirkt, dass sich die Belastung der Solaranlage durch Witterungseinflüsse wie Wind, Regen oder Schnee reduzieren lässt, da die Solarpaneelen in der geschützten Ruheposition keine oder eine geringe Angriffsfläche bieten. Die Dimensionierung der erfindungsgemässen Solaranlage, um eine ausreichende Stabilität zu erhalten, kann daher im Vergleich zu Solaranlagen des weiter oben beschriebenen Stands der Technik reduziert werden. Diese redu zierte Dimensionierung führt zu geringeren Herstellungskosten der Solaranlagen. Auch können die Instandhaltungskosten reduziert werden, da Schäden durch Witterungseinflüsse bei der erfindungsgemässen Solaranlage grösstenteils vermieden werden können. Als Angriffsmittel sind Seilzüge, Ketten, Zahnstangen, ausfahrbare TeleskopArme oder Scherengittermechanismen denkbar, welche die Solarpaneele in die beiden Endpositionen oder Positionen dazwischen verschieben.

Die Abdeckplatte hat den Vorteil, dass der Verschluss der Einhausung durch die Abdeckplatte automatisch erfolgt, ohne dass eine Abdeckung aufgeklappt bzw. zugeklappt werden müsste. Daher kann auf bewegliche zusätzliche Teile oder Klappensteuerungen oder Klappenantriebe verzichtet werden. Die Abdeckplatte ist daher fehlerunanfällig und wartungsfrei. Denkbar ist auch, dass die äusserste Solarpaneele beispielsweise mit Rippen verstärkt ist und dadurch als eine Abdeckplatte wirkt. Eine zusätzliche Abdeckplatte ist in diesem Fall nicht mehr notwendig.

Zweckmässigerweise ist die Abdeckplatte, wenn sich die Solarpaneele in der Schutzposition befinden, mit der Einhausung verrastet. Die Verrastung bewirkt, dass die Solarpaneele zuverlässig in der Einhausung abgedeckt sind und Witterungseinflüsse die Abdeckplatte nicht öffnen, beschädigen oder abreissen können.

Als vorteilhaft erweist es sich, wenn die Abdeckplatte mittels eines Schnappverschlusses mit der Einhausung verrastbar ist, welcher Schnappverschluss sich bei einer definierten Belastung öffnet bzw. schliesst. Durch den Anpressdruck, welcher sich beim Ein- und Ausfahren auf den Schnappverschluss aufbaut kann die Einhausung durch die Abdeckplatte automatisch verschlossen oder geöffnet werden, ohne dass zusätzliche Schliessmechanismen notwendig wären.

In einer weiteren bevorzugten Ausführungsform sind die Solarpaneele in der Ruheposition in einer Einhausung aufgenommen, welche ein bewegliches Schutzelement aufweisen kann. In der Ruheposition sind die Solarpaneelen deshalb gut geschützt, auch wenn ein Sturm oder andere extreme Wetterverhältnisse vorhanden sein sollten. Als bewegliches Schutzelement dient bevorzugt ein Deckel, wodurch auch die Aufnahmeöffnung der Einhausung verschliessbar ist, nachdem die zusammengeklappten Solarpaneele in der Einhausung aufgenommen wurden.

Zweckmässigerweise sind benachbarte Solarpaneelen derart miteinander verbunden, dass eine Schub- oder Druckkraft von einer Solarpaneele oder einem druck- und schubübertragendes Halteelement auf eine benachbarte Solarpaneele oder ein benachbartes druck- und schubübertragendes Halteelement übertragbar ist Das Angriffsmittel kann daher an einem Ende der Solarpaneel- Anordnung angeordnet sein und alle Solarpaneele durch Aufbringen einer Schub- oder Druckkraft verschieben. Ein druckund schubübertragendes Halteelement kann beispielsweise ein Scherengitter oder eine Teleskopstange sein, welches an den Solarpaneelen seitlich festgelegt ist.

In einem bevorzugten Ausführungsbeispiel sind benachbarte Solarpaneelen an ihren einander zugewandten Seitenkanten in der Art eines Faltdachs durch erste und zweite alternierende Gelenke miteinander verbunden. In der Ruheposition lassen sich die Solarpaneelen zu einem kleinen Paket zusammenschieben, welches geringe Angriffsflächen für Wind bietet. In der Betriebsposition besitzt die Solarpaneel-Anordnung eine grosse Oberfläche, da sie vollständig entfaltbar ist, wodurch eine möglichst grosse Oberfläche der Sonne zugewandt ist. Es versteht sich, dass wie bereits weiter oben ausgeführt, nicht jedes Trageelement des Faltdaches bzw. des Faltstores, welches zwischen einem ersten und zweiten Gelenk angeordnet ist mit Solarzellen bestückt sein muss. Trageelemente können daher teilweise auch frei von Solarzellen sein.

In einem weiteren bevorzugten Ausführungsbeispiel sind die Solarpaneele mit Schiebeelementen an dem wenigstens einen Haltelement verschiebbar festgelegt und die ersten Gelenke sind an den dem Halteelement abgewandten Seiten der Schiebelemente angeordnet. Dadurch sind die ersten Gelenke oberhalb des Führungsseils angeordnet. Diese Anordnung bewirkt, dass ein Schattenwurf des Führungsseils auf die Solarpaneele, welcher den Wirkungsgrad der Solaranlage verschlechtern würde, weitestgehend vermieden ist. Die Höhe der Schiebeelemente ist so gewählt, dass bei einem flachen Sonneneinstrahlwinkel von max. 25° gegenüber dem Horizont keine Verschattung auf der aktiven Zellfläche verursacht wird, bevorzugt bei einem Einstrahlwinkel von 15° und besonders bevorzugt bei einem Einstrahlwinkel von 10° oder weniger. Mit Vorteil ist eine Solarpaneele eine ebene Platte mit zwei im Wesentlichen parallelen Flachseiten, wobei zumindest auf einer der Flachseiten eine Mehrzahl von Photovoltaik-Zellen angeordnet ist. Dadurch lässt sich eine möglichst dichte Anordnung von Photovoltaik-Zellen auf engem Raum realisieren. Abstände zwischen den Zellen können es ermöglichen, dass ein Teil der Sonneneinstrahlung durch die Platte (falls sie transparent ist) auf die Bodenfläche dringen kann.

Zweckmässigerweise sind Solarpaneele gleicher Winkelausrichtung elektrisch leitend miteinander verbunden. Denkbar sind flexible Kabelleitungen, welche das Verschwenken der Solarpaneelen relativ zueinander nicht behindern und durch das Verschwenken nicht abgeknickt werden. Zweckmässigerweise sind Solarpaneele gleicher Winkelausrichtung zu einem Strang gekoppelt, um Solarpaneele mit gleicher oder ähnlicher elektrischer Leistung miteinander zu verbinden. Auch können direkt benachbarte Solarpaneele elektrisch miteinander verbunden sein.

Als vorteilhaft erweist es sich, wenn wenigstens jedes 10. Solarpaneelfaltelement an dem wenigstens einen Haltelement verschiebbar ist. Denkbar ist es auch, dass alle Solarpaneele oder jedes zweite Solarpaneel an dem Halteelement verschiebbar gehalten sind, falls es die Stabilität der Solaranlage erfordert.

Dadurch, dass das Halteelement ein Führungsseil oder eine Führungsstange ist, sind die Solarpaneele ausreichend sicher gehalten und linear entlang des Führungsseils oder der Führungsstange verschiebbar. Ein Führungsseil oder eine Führungsstange ist kostengünstig und lässt sich an Haltestützen oder flachen Oberflächen, beispielsweise Dächern, rasch befestigen. Das Führungsseil bzw. die Führungsstange kann nicht nur an den Scharnieren angeordneten sein, sondern kann, wie bei Faltstoren verbreitet angewendet, an der Mitte der seitlichen Seitenkanten der Solarpaneele festgelegt sein. Zweckmässigerweise kann das Halteelement auch eine Teleskopstange oder ein Scherengitter sein, wenn von dem Haltelement eine erhöhte Stabilität gefordert wird.

In einem besonders bevorzugten Ausführungsbeispiel erfolgt die Überführung von der Betriebsposition in die Ruheposition und vice versa durch einen Antrieb, insbesondere einen elektrischen Antrieb. Der elektrische Antrieb lässt sich einfach steuern und kann die Solarpaneele in Abhängigkeit von meteorologischen Messdaten oder Sensordaten vollautomatisch zwischen den Endpositionen oder in Zwischenpositionen verschieben. Mit Vorteil ist der Wechsel zwischen der Betriebsposition und der Ruheposition durch eine Steuerung, welche lokale Sensorsignale und/oder lokale oder überregionale Meteodaten über ein Netzwerk auswertet, durchführbar. Die Solarpaneelen lassen sich daher zum Beispiel in Abhängigkeit von Grenzwerten, welche mit den Messwerten der Sensoren verglichen werden, oder in Abhängigkeit von der Kombination und Fallunterscheidungen von mehreren meteorologischen Grössen, um z.B. das nahen einer Gewitterfront mit Windböen oder Hagel zu erkennen, in die gewünschte Position überführen. Die Solarpaneelen lassen sich daher vollautomatisch in Abhängigkeit von den vorliegenden Wetterbedingungen in die Betriebsposition oder in die Ruheposition verschieben, ohne dass eine personelle Überwachung notwendig wäre.

Zweckmässigerweise erfassen die Sensoren die Windstärke, Eismenge, Schneemenge, Niederschlagsmenge, Temperatur, Feuchtigkeit, Blitzaktivitäten und Sonneneinstrahlung. Die Sensorensignale können auch zweckmässig mit einander verkoppelt werden, wodurch Bedingungen definiert werden können, um kritische Wettersituatioen sofort zu erkennen, um ein Optimum zwischen sicherem Betrieb und sicherer Verwahrung in der Ruhestellung zu erreichen. Die klassifizierte Wettersituation entscheidet auch über die Mindestdauer der Verweilzeit in der Ruheposition. Die Erfassung dieser Daten ist ausreichend, um die Solaranlage vor Einflüssen zu schützen, welche die Solaranlage beschädigen oder bei Stürmen, Hagel, Schnee oder anderen widrigen Verhältnissen zerstören könnten. In Abhängigkeit von der vorhandenen Sonneneinstrahlung sind optional die Solarpaneelen auch in verschiedene Zwischenposition verschiebbar, um einen optimalen Winkel zur Sonne herzustellen. Denkbar ist es auch, dass die Solaranlage eine Schnittstelle für eine Intemetverbindung aufweist. So können auch meteorologische Daten aus dem Internet zur Steuerung der Solarpaneel-Position herangezogen werden.

Von Vorteil ist es, wenn die Solaranlage mit einer Notstromversorgung ausgestattet ist. Insbesondere der Einfahrmechanismus bleibt dann weiter in Funktion, auch wenn die Stromversorgung unterbrochen ist Eine Beschädigung der Solaranlage ist daher auch bei Stromausfall verhindert, da die Solarpaneelen auch bei Stromausfall in die Ruheposition überführbar sind.

Zweckmässigerweise umfasst die Solaranlage eine Reinigungseinrichtung, welche die Solarpaneele von Verunreinigungen reinigt. Sand, Schnee, Vogelkot, Luftverschmutzungen oder andere Verunreinigungen, welche die Leistung der Solaranlage beeinträchtigen, können daher ohne Personeneinsatz entfernt werden.

Mit Vorteil umfasst die Reinigungseinrichtung wenigstens eine mechanische Reinigung, eine Reinigung mittels Flüssigkeit oder mittels Druckluft und Überwachungssensoren zur Erfassung der Sauberkeit. Diese Einrichtungen ermöglichen es, dass die Solaranlage automatisch gereinigt wird, wenn die Vorderseiten der Solarpaneele 19 verschmutzt sind. Das Prinzip kann ähnlich einem Scheibenwischer eines Pkws funktionieren.

Als vorteilhaft erweist es sich, wenn zwischen Haltestützen eine Schutzeinrichtung, insbesondere ein Netz oder eine zeltplanenähnliche Überdachung, festgelegt ist. Die Haltestützen können als Haltelement für ein Vogel- oder Hagelnetz dienen. Eine unter der Solaranlage liegende landwirtschaftlich genutzte Fläche ist daher vor Vogelfrass und Niederschlägen geschützt. Die Schutzvorrichtung bzw. das Netz kann dauerhaft aufgespannt sein oder an einer Endstütze einrollbar festgelegt sein.

Ein weiterer Aspekt der Erfindung betrifft ein Verfahren gemäß Anspruch 13 zur Vermeidung von Verschmutzungen der Oberflächen der Solarpaneelen einer Solaranlage gemäß Anspruch 1.

Zweckmässigerweise wird die Überführung in die Ruheposition und aus der Ruheposition heraus in Abhängigkeit von lokalen Witterungseinflüsse durch eine Steuerung gesteuert. Eine Verschmutzung kann durch die Steuerung vermieden werden, da die Solarpaneele sich in der ruhe- bzw. in der Schutzposition befinden, wenn Witterungsbedingungen am Standort der Solaranlage vorliegen, welche zu einer Verschmutzung der Solarpaneele führen könnten. Zu diesen Witterungseinflüssen zählt auch das Beschlagen der Solarpaneele mit Wasserdampf, da das Kondenswasser mit Sand und anderen Luftverschmutzungen verkleben kann. Da die Solarpaneele über Nacht, bzw. wenn die Luftfeuchtigkeit einen Grenzwert überschreitet, sich in der Schutzposition befinden, kann ein Beschlagen der Solarpaneele in der Betriebsposition verhindert werden.

Weitere Vorteile und Merkmale ergeben sich aus der nachfolgenden Beschreibung mehrerer Ausführungsbeispiele der Erfindung unter Bezugnahme auf die schematischen Darstellungen. Es zeigen in nicht massstabsgetreuer Darstellung:
- Figur 1:: eine Seitenansicht einer Ausführungsform der erfindungsgemässen Solaranlage;
- Figur 2:: eine Draufsicht auf die Solaranlage aus Figur 1;
- Figur 3:: eine axonometrische Ansicht der zusammengeschobenen Solarpaneelen mit einer Abdeckplatte;
- Figur 4:: eine axonometrische Ansicht der Solaranlage mit erhabenen Schiebeelementen;
- Figur 5:: eine einzelne Solarpaneele in einer Seitenansicht;
- Figur 6:: eine Draufsicht einer Grossanlage und
- Figur 7:: eine Seitenansicht der Grossanlage aus Figur 7.

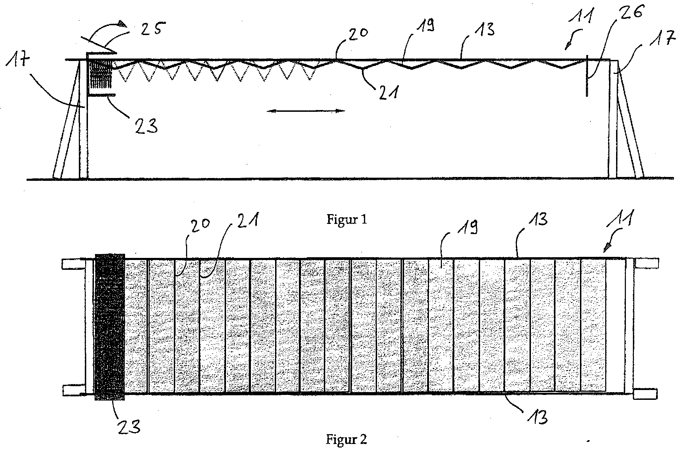

Die Figuren 1 und 2 zeigen eine Ausführungsform der erfindungsgemässen Solaranlage, welche gesamthaft mit dem Bezugszeichen 11 bezeichnet wird. Als Halteelemente sind in dieser Ausführungsform zwei im Wesentlichen parallel geführte Führungsseile oder Führungsstangen 13 vorgesehen. Die Führungsseile oder -stangen 13 sind zwischen zwei Stützen 17 gespannt bzw. geführt. Denkbar wäre es auch, dass die Führungsstangen 13 an einer ebenen Fläche, beispielsweise an einem Dach, festgelegt sind, ohne dass Stützen 17 zur Anwendung kommen.

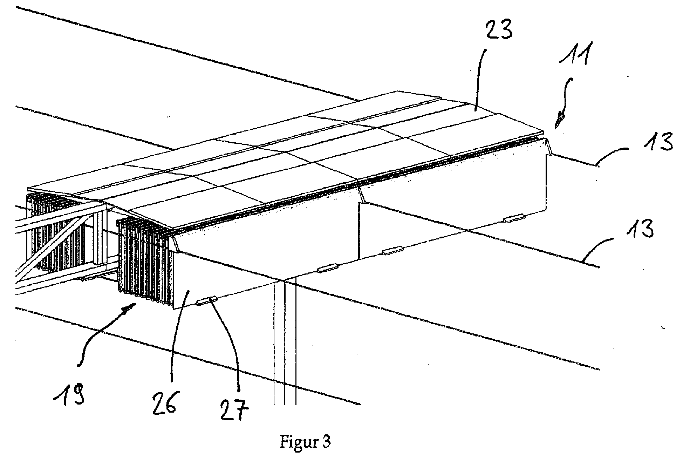

An den Führungsseilen bzw. Führungsstangen 13 ist eine Mehrzahl von hintereinander angeordneten Solarpaneelen 19 gehalten. Wenn im Rahmen dieser Anmeldung von einer Solarpaneele 19 gesprochen wird, so sei damit vorzugsweise eine Platte mit zwei im Wesentlichen parallelen Flachseiten offenbart, wobei an wenigstens einer Flachseite eine Mehrzahl von Photovoltaik-Zellen angeordnet ist. Die Figuren 1 und 3 zeigen, dass benachbarte Solarpaneele 19 an ihren Seitenkanten gelenkig miteinander verbunden sind. Die gelenkige Verbindung kann beispielsweise als ein Scharnier 20 ausgebildet sein, wobei an den zugewandten Seitenkanten befestigte Buchsen 22 mittels eines Bolzens miteinander drehbar verbunden sind. Die Solarpaneele 19 sind derart gelenkig miteinander verbunden, dass sie fächerartig zusammen- und auseinanderschiebbar sind. Dementsprechend lässt sich die Gesamtheit von Solarpaneelen 19 von einer ausgezogenen Betriebsposition in eine eingezogene Ruheposition und vice versa verschieben oder auch in eine Zwischenposition überführen (Figuren 1 und 3). Die Einhausung 23 kann als eine Vorrichtung zur Vermeidung der Verschmutzung der Solarpaneele 19 erachtet werden, da die Solarpaneele 19 wenigstens über Nacht in die Einhausung 23 eingefahren werden. Dadurch wird die Zeit, in der die Solarpaneele 19 verschmutzenden Umwelteinflüssen ausgesetzt sind, durch die schützende Einhausung 23 reduziert. Die Einhausung ist also eine präventive Reinigungsmassnahme.

In der Betriebsposition schliessen die Solarpaneele 19 mit der Vertikalen einen Winkel ein der bevorzugt grösser als 75 Grad. Damit die Solarpanellen in der Ruheposition möglichst wenig Platz benötigen schliessen sie in dieser Position einen Winkel mit der Vertikalen ein, welche kleiner als 10 Grad ist (Figur 3). In der Ruheposition sind die Solarpaneelen 19 in eine Einhausung 23 aufgenommen. Die Einhausung bietet den Solarpaneelen 19 Schutz vor Wind und Niederschlag. Die Ruheposition erfüllt daher auch die Aufgabe einer Schutzposition. Die Einhausung 23 kann auch noch einen Deckel 25 aufweisen, um den Faltenbalg von Solarpaneelen 19 vollständig zu schützen. Der Deckel 25 kann die Aufnahmeöffnung der Einhausung 23 verschliessen, nachdem der Faltenbalg in der Einhausung aufgenommen ist. Das Dach der Einhausung ist zweckmässigerweise auch mit Solarmodulen belegt, die allerdings fest installiert sind.

Anstatt des Deckels 25 ist an der, von der Einhausung 23 gesehenen, äussersten Solarpaneele 19 eine vertikale Abdeckplatte 26 festgelegt. Die Abdeckplatte 26 bewegt sich also mit den Solarpaneelen 19 von der Betriebsposition in die Schutzposition und umgekehrt. Die Solarpaneele 19 sind in der Einhausung 23 daher durch die Abdeckplatte 26 immer automatisch vollständig abgedeckt. Ein Deckel, welcher ein zusätzliches fehleranfälliges Bauteil darstellt, kann daher vermieden werden. Die Abdeckplatte 26 verrastet in Rastnasen 27 automatisch beim Einfahren des letzten Solarpaneels 19 in die Einhausung 23. Die Rastnasen 27 haben die Funktion eines Schnappverschlusses, d.h. sie halten die Abdeckplatte 26 bis zu einer bestimmten Belastung und geben die Abdeckplatte 26 frei, wenn eine bestimmte Belastung überschritten wird. Beim Einfahren der letzten Solarpaneele 19 in die Einhausung 23 wird der Widerstand der Rastnasen 27 automatisch durch den Anpressdruck der Abdeckplatte 26 überwunden und die Abdeckplatte 26 verschliesst die Einhausung 23. Beim Ausfahren aus der Schutzposition wird der Haltedruck der Rastnasen 27 überwunden und die Solarpaneele 19 können aus der Schutzposition ausgefahren werden, ohne dass irgendwelche zusätzliche Verfahrensschritte zur Öffnung der Abdeckplatte 26 notwendig wären. Als Rastnasen sind flexible Kunststoffvorsprünge denkbar, bevorzugt sind jedoch vorgespannte Vorsprünge, beispielsweise durch Federn, welche durch den Anpressdruck der Abdeckplatte beim Ein- bzw. Ausfahren verschwenkt werden und sodann wieder in die Verschlussstellung zurückschnappen.

Von Vorteil ist es, wenn die Solarpaneele 19 keine Glasabdeckung besitzen, da diese in der Ruhestellung wegen ihrer geringen Dicke noch weiter zusammenschiebbar sind, als wenn eine Glasabdeckung vorhanden ist. Der Schutz einer Glasabdeckung ist bei der erfindungsgemässen Solaranlage 11 ohnedies nicht zwingend notwendig, da bei widrigen Wetterbedingungen die Solarpaneele 19 in die Einhausung 23 eingezogen sind. Benachbarte Solarpaneele 19 sind elektrisch miteinander verbunden, ohne dass dadurch das Zusammenschieben bzw. das Auseinanderziehen der Solarpaneelen 19 beeinträchtigt wäre. Geeignet für die elektrische Verbindung sind insbesondere Kabel.

Während des Verschiebens in die Schutz- oder in die Arbeitsposition kann der Solarwechselrichter ausgeschalten werden, um mögliche elektrische Gefährdungen auszuschliessen.

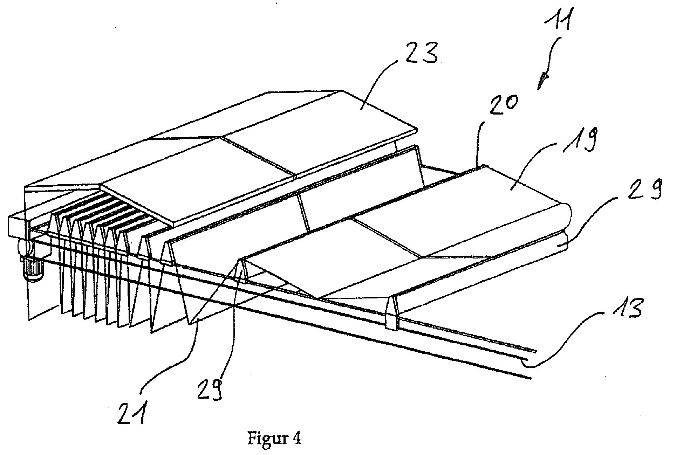

In Figur 4 ist eine Aufhängung der Solarpaneele 19 gezeigt, welche es vermeidet, dass die Führungsseile 13 einen Schatten auf die Solarpaneele 19 werfen. Die obenliegenden ersten Gelenke bzw. Scharniere 20, welche benachbarte Solarpaneele 19 gelenkig verbinden, sind an Schiebeelementen 29 erhöht angeordnet. Die untenliegenden zweiten Gelenke bzw. Scharniere 21 sind freihängend, da nur die ersten Scharniere 20 mit den führungsseilen 13 in Verbindung stehen. Durch die Schiebeelemente 29 ist daher ein Höhenabstand zwischen den Führungsseilen 13 und den Scharnierachsen gebildet, welcher, so gewählt ist, dass bei einem flachen Sonneneinstrahlwinkel von max. 25° gegenüber dem Horizont keine Verschattung auf der aktiven Zellfläche verursacht wird, bevorzugt bei einem Einstrahlwinkel von 15° und besonders bevorzugt bei einem Einstrahlwinkel von 10° oder weniger keine Verschattung auf den Solarzellen verursacht wird.

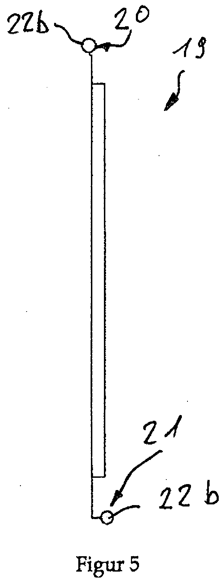

In Figur 5 ist eine einzelne Solarpaneele 19 mit zwei an gegenüberlegenden Seiten angeordneten Buchsen 22a,22b gezeigt, welche zusammen mit Buchsen benachbarter Solarpaneele 19 das erste und zweite Scharnier 20,21 bilden. Die Buchsen sind dabei derart seitenversetzt angeordnet, dass sie mit Buchsen von benachbarten Solarpaneelen 19 platzsparend zusammenwirken.

Zur verschieblichen Halterung der gelenkig miteinander verbundenen Solarpaneelen 19 an dem Führungsseil oder der Führungsstange 13 ist es nicht notwendig, dass jedes Solarpaneel 19 an dem Haltelement gehalten ist. So kann auch nur jedes zweite oder dritte Solarpaneel 19 an dem Haltelement gehalten sein. Für eine Halterung, welche das Gesamtgewicht der Solarpaneelen 19 trägt, ist es aber bevorzugt, dass jede zehnte Solarpaneele 19 an dem Halteelement gehalten ist. Zur Halterung können beispielsweise Ösen, Haken oder Schiebeelemente 29 an den Solarpaneelen 19 dienen, durch welche die Halteelemente 13 hinduxchgeführt sind.

Das fächerartige Zusammenschieben der Solarpaneelen 19 ist besonders dazu geeignet, die Solaranlage 11 vor Zerstörungen bedingt durch Witterungseinflüsse zu schützen. Zweckmässigerweise wird die Solaranlage 11 daher durch lokale Sensoren oder überregionale Wetterinformation überwacht bzw. gesteuert. Bevorzugt überwachen die Sensoren meteorologische Werte wie Windstärke, Schneefall, Niederschlagsmenge, Temperatur, Luftfeuchte usw. Überschreiten bzw. Unterschreiten die erfassten Werte in einer Datenbank hinterlegte Referenzwerte bzw. Kombinationen und Verknüpfungen von mehreren Wetterindikatoren, so werden die Solarpaneele 19 automatisch eingefahren oder ausgefahren. Vorzugsweise wird ein elektrischer Antrieb von den Sensoren angesteuert. Der elektrische Antrieb ist mit Angriffsmitteln mit den Solarpaneelen 19 verbunden, um die Solarpaneelen 19 automatisch zwischen der Ruheposition und der Betriebsposition zu verschieben. Als Angriffsmittel zur Übertragung von Schub- oder Zugkräften kann beispielsweise ein Seil, eine Kette oder eine Zahnstange dienen. Die Solarpaneele können mit dem Angriffsmittel jedoch auch in jede Position zwischen den beiden Endpositionen verschoben werden. Dies ist sinnvoll, um die Solarpaneelen 19 in einen optimalen Winkel zur Sonne zu bewegen. Dafür kann über einen Sensor der Strahlungswinkel der Sonne erfasst werden.

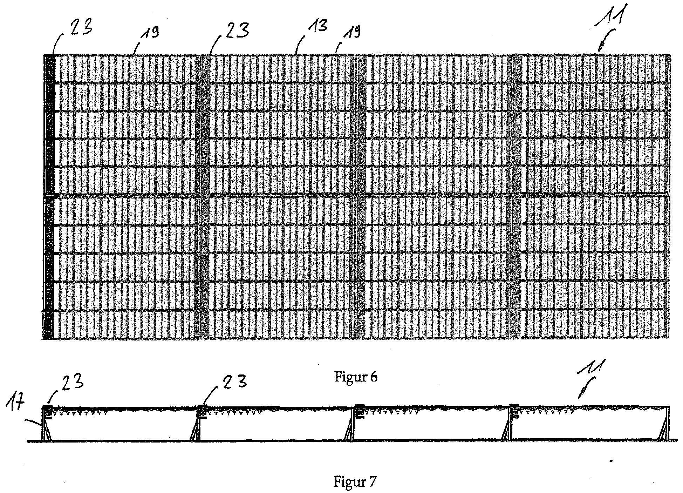

In den Figuren 6 und 7 ist gezeigt, wie einzelne Solaranlagen 11 nebeneinander und hintereinander zu einer Grossanlage aufgebaut sein können. In diesem Ausführungsbeispiel sind 40 Solaranlagenfelder 11 nebeneinander bzw. hintereinander angeordnet. Zweckmässigerweise ist vorgesehen, dass mit einer Antriebseinheit mehrere Solaranlageneinheiten in Richtung der Ausziehbewegung und/oder parallel dazu synchron ein- und ausziehbar sind.

### Legende:

- 11: Solaranlage
- 13: Führungsseile, Führungsstangen
- 17: Stützen
- 19: Solarpaneele
- 20: Erste Scharniere bzw. Gelenke
- 21: Zweite Scharniere bzw. Gelenke
- 22a,22b: Buchse
- 23: Einhausung
- 25: Deckel
- 26: Vertikale Abdeckplatte
- 27: Rastnasen
- 29: Schiebeelement

## Patentansprüche

1. Solaranlage (11) mit
- einer Mehrzahl von in einer Reihe angeordneten Solarpaneelen (19),
- mindestens einem Halteelement (13), an welchem die Solarpaneele (19) hintereinander gehalten sind und entlang welchem die Solarpaneele mit einem Angriffsmittel von einer ausgezogenen Betriebsposition in eine eingezogene Ruheposition verschiebbar sind und
einer Einhausung (23), in welche die Solarpaneele in ihrer Ruheposition aufgenommen sind, wodurch die Ruheposition eine Schutzposition ist,
**dadurch gekennzeichnet,**
**dass** an dem äussersten Solarpaneel (19), gesehen von der Einhausung (23) aus, eine im Wesentlichen vertikal orientierte Abdeckplatte (26) festgelegt ist, wodurch die Abdeckplatte (26) mit den Solarpaneelen (19) von der Betriebsposition in die Schutzposition und umgekehrt mitbewegbar ist.

2. Solaranlage nach Anspruch 2, **dadurch gekennzeichnet, dass** das äusserste Solarpaneel derart verstärkt ist, sodass es als eine Abdeckplatte (26) wirkt.

3. Solaranlage nach Anspruch 2, **dadurch gekennzeichnet, dass** die Abdeckplatte (26), wenn sich die Solarpaneele (19) in der Schutzposition befinden, mit der Einhausung (23) verrastet ist.

4. Solaranlage nach Anspruch 3, **dadurch gekennzeichnet, dass** die Abdeckplatte (26) mittels eines Schnappverschlusses (27) mit der Einhausung (23) verrastbar ist, welcher Schnappverschluss (27) sich bei einer definierten Belastung öffnet bzw. schliesst.

5. Solaranlage nach Anspruch 1, **dadurch gekennzeichnet, dass** die Einhausung ein bewegliches Verschlusselement (25) aufweist.

6. Solaranlage nach einem der Ansprüche 1 bis 5, **dadurch gekennzeichnet, dass** benachbarte Solarpaneelen (19) derart miteinander verbunden sind, dass eine Schub- oder Druckkraft von einer Solarpaneele (19) oder einem druck- und schubübertragendem Halteelement (13,27) auf eine benachbarte Solarpaneele (19) oder ein benachbartes druck- und schubübertragendes Halteelement (13,27) übertragbar ist.

7. Solaranlage nach einem der Ansprüche 1 bis 6, **dadurch gekennzeichnet, dass** benachbarte Solarpaneelen (19) an ihren einander zugewandten Seitenkanten in der Art eines Faltstores durch erste und zweite alternierende Gelenke miteinander verbunden sind.

8. Solaranlage nach einem der Ansprüche 1 bis 7, **dadurch gekennzeichnet, dass** die Solarpaneele (19) mit Schiebeelementen (29) an dem wenigstens einen Haltelement (13) verschiebbar festgelegt sind und dass die ersten Gelenke an den dem Halteelement (13) abgewandten Seiten der Schiebelemente (29) angeordnet sind.

9. Solaranlage nach einem der Ansprüche 1 bis 8, **dadurch gekennzeichnet, dass** eine Solarpaneele (19) eine ebene Platte mit zwei im Wesentlichen parallelen Flachseiten ist, wobei zumindest auf einer der Flachseiten eine Mehrzahl von Photovoltaik-Zellen angeordnet ist.

10. Solaranlage nach einem der Ansprüche 1 bis 9, **dadurch gekennzeichnet, dass** Solarpaneelen (19) gleicher Winkelausrichtung elektrisch leitend miteinander verbunden sind.

11. Solaranlage nach einem der Ansprüche 1 bis 10, **dadurch gekennzeichnet, dass** der Wechsel zwischen der Betriebsposition und der Ruheposition durch eine Steuerung, welche lokale Sensorsignale und/oder lokale oder überregionale Meteodaten über ein Netzwerk auswertet, durchführbar ist.

12. Solaranlage nach einem der Ansprüche 1 bis 11, **dadurch gekennzeichnet, dass** zwischen Haltestützen (17) eine Schutzeinrichtung, insbesondere ein Netz, oder eine zeltplanenähnliche überwachung festgelegt ist.

13. Verfahren zur Vermeidung von Verschmutzungen der Oberflächen der Solarpaneelen (19) einer Solaranlage (11) gemäß Anspruch 1, welche Solarpaneelen (19) entlang wenigstens eines Halteelements (13) in eine Ruheposition verschiebbar sind, bei welchem Verfahren die Solarpaneele (19) bei der Überführung in die Ruheposition in eine Einhausung (23) hineinverschoben werden
**dadurch gekennzeichnet,**
**dass** die Einhausung (23) durch eine an dem letzten Solarpaneel (19) angeordnete Abdeckplatte (26) verschlossen wird, wenn die äusserste Solarpaneelen (19) in die Einhausung (23) eingefahren wird.

14. Verfahren nach Anspruch 3, **dadurch gekennzeichnet, dass** die Überführung in die Ruheposition und aus der Ruheposition heraus in Abhängigkeit von lokalen Witterungseinflüsse durch eine Steuerung gesteuert wird.

## Claims

1. Solar installation (11) with
- a multitude of solar panels (19) placed in a row,
- at least one retaining element (13) on which the solar panels (19) are held one behind the other and along which the solar panels are slidable with a catching means from an extended operational position into a retracted idle position and an enclosure (23) in which the solar panels are received in their idle position so that the idle position is a protection position,
**characterized in that** a covering plate (26) substantially vertically orientated, this being seen from the enclosure (23), is fixed to the most outer solar panel (19) so that the covering plate (26) can be displaced together with the solar panels (19) from the operational position to the protection position and vice-versa.

2. Solar installation according to claim 2, **characterized in that** the most outer solar panel is reinforced in such a manner that it acts as a covering plate (26).

3. Solar installation according to claim 2, **characterized in that** the covering plate (26) is snapped-in with the enclosure (23) when the solar panels (19) are in the protection position.

4. Solar installation according to claim 3, **characterized in that** the covering plate (26) can be snapped-in with the enclosure (23) by means of a snap closure (27), which snap closure (27) opens or closes for a defined load.

5. Solar installation according to claim 1, **characterized in that** the housing has a mobile closure element (25).

6. Solar installation according to one of the claims 1 to 5, **characterized in that** adjacent solar panels (19) are connected with each other in such a manner that a pushing or pressing force can be transmitted by a solar panel (19) or by a pressing or pushing retaining element (13, 27) to an adjacent solar panel (19) or to an adjacent pressing or pushing retaining element (13, 27).

7. Solar installation according to one of the claims 1 to 6, **characterized in that** adjacent solar panels (19) are connected with each other on their lateral edges turned to each other in the manner of a Venetian blind by first and second alternating joints.

8. Solar installation according to one of the claims 1 to 7, **characterized in that** the solar panels (19) are fixed slidingly with sliding elements (29) on the at least one retaining element (13) and that the first joints are placed on the sides of the sliding elements (29) that are turned off the retaining element (13).

9. Solar installation according to one of the claims 1 to 8, **characterized in that** a solar panel (19) is an even plate with two substantially parallel flat sides, whereby a multitude of photovoltaic cells is placed at least on one of the flat sides.

10. Solar installation according to one of the claims 1 to 9, **characterized in that** solar panels (19) with the same angular orientation are electrically conductively connected with each other.

11. Solar installation according to one of the claims 1 to 9, **characterized in that** the change between the operating position and the idle position can be carried out by a control that exploits local sensor signals and/or local or supraregional weather data over a network.

12. Solar installation according to one of the claims 1 to 11, **characterized in that** a protecting device, in particular a network, or a tent-like roof structure is fixed between retaining posts (17).

13. Method for avoiding dirt of surfaces of the solar panels (19) of a solar installation (11) according to claim 1, which solar panels (19) are slidable along at least one retaining element (13) into an idle position, method for which the solar panels (19) are slid into an enclosure (23) during the displacement into the idle position, **characterized in that** the enclosure (23) is closed by a covering plate placed on the last solar panel (19) when the most outer solar panel (19) is entered into the enclosure (23).

14. Method according to claim 3, **characterized in that** the displacement into the idle position and from the idle position is controlled by a control depending on local weather influences.

## Revendications

1. Installation solaire (11) avec
- une multitude de panneaux solaires (19) placés en une rangée,
- au moins un élément de retenue (13) sur lequel les panneaux solaires (19) sont tenus les uns derrières les autres et le long duquel les panneaux solaires peuvent être glissés avec un moyen d'attaque d'une position de fonctionnement sortie à une position de repos rétractée et
un bâti (23) dans lequel les panneaux solaires sont logés dans leur position de repos si bien que la position de repos est une position de protection, **caractérisée en ce qu'**une plaque de recouvrement (26) orientée substantiellement verticalement, ceci étant vu à partir du bâti (23), est fixée sur le panneau solaire le plus à l'extérieur (19), si bien que la plaque de recouvrement (26) peut être déplacée en même temps avec les panneaux solaires (19) de la position de fonctionnement à la position de protection et vice-versa.

2. Installation solaire selon la revendication 2, **caractérisée en ce que** le panneau solaire le plus à l'extérieur est renforcé de telle manière qu'il agit comme une plaque de recouvrement (26).

3. Installation solaire selon la revendication 2, **caractérisée en ce que** la plaque de recouvrement (26) est enclenchée avec le bâti (23) lorsque les panneaux solaires (19) se trouvent dans la position de protection.

4. Installation solaire selon la revendication 3, **caractérisée en ce que** la plaque de recouvrement (26) peut être enclenchée avec le bâti (23) au moyen d'une fermeture à encliquetage (27), laquelle fermeture à encliquetage (27) s'ouvre ou se ferme pour une charge définie.

5. Installation solaire selon la revendication 1, **caractérisée en ce que** le bâti présente un élément de fermeture mobile (25).

6. Installation solaire selon l'une des revendications 1 à 5, **caractérisée en ce que** des panneaux solaires voisins (19) sont reliés l'un à l'autre de telle manière qu'une force de poussée ou de pression peut être transmise par un panneau solaire (19) ou par un élément de retenue (13, 27) qui transmet la pression ou la poussée au panneau solaire voisin (19) ou un élément de retenue voisin (13, 27) qui transmet la pression ou la poussée.

7. Installation solaire selon l'une des revendications 1 à 6, **caractérisée en ce que** des panneaux solaires voisins (19) sont reliés l'un à l'autre sur leurs arêtes latérales tournées l'une vers l'autre à la manière d'un store pliant par des premières et des secondes articulations qui alternent.

8. Installation solaire selon l'une des revendications 1 à 7, **caractérisée en ce que** les panneaux solaires (19) sont fixés coulissants avec des éléments coulissants (29) sur l'élément de retenue qui existe au moins (13) et que les premières articulations sont placées sur les côtés des éléments coulissants (29) qui sont éloignés de l'élément de retenue (13).

9. Installation solaire selon l'une des revendications 1 à 8, **caractérisée en ce qu'**un panneau solaire (19) est une plaque plane avec deux côtés plats substantiellement parallèles, cependant qu'une multitude de cellules photovoltaïques est placée au moins sur l'un des côtés plats.

10. Installation solaire selon l'une des revendications 1 à 9, **caractérisée en ce que** des panneaux solaires (19) de même orientation angulaire sont reliés l'un à l'autre en étant électroconducteurs.

11. Installation solaire selon l'une des revendications 1 à 10, **caractérisée en ce que** le changement entre la position de fonctionnement et la position de repos peut être effectué par une commande qui exploite des signaux de détecteur locaux et/ou des données météo locales ou suprarégionales par un réseau.

12. Installation solaire selon l'une des revendications 1 à 11, **caractérisée en ce qu'**un dispositif de protection, en particulier un réseau ou une toiture semblable à la toile d'une tente, est fixé entre des montants de retenue (17).

13. Procédé pour éviter des salissures des surfaces des panneaux solaires (19) d'une installation solaire (11) selon la revendication 1, lesquels panneaux solaires (19) peuvent être glissés dans une position de repos le long d'au moins un élément de retenue (13), procédé pour lequel les panneaux solaires (19) sont glissés dans un bâti lors du déplacement dans la position de repos, **caractérisé en ce que** le bâti (23) est fermé par une plaque de recouvrement (26) placée sur le dernier panneau solaire (19) lorsque les panneaux solaires les plus à l'extérieur (19) sont rentrés dans le bâti (23).

14. Procédé selon la revendication 13, **caractérisé en ce que** le déplacement dans la position de repos et hors de la position de repos est commandé par une commande en fonction d'influences atmosphériques locales.
